# EUROPEAN PATENT APPLICATION

(11) **EP 1 555 288 A2**
(43) Date of publication of application: **20.07.2005**
(21) Application number: 05000010.8
(22) Date of filing: 03.01.2005
(51) Int. Cl.: C08K 5/098

(54) **Resin composition for injection molding, and container member**

(30) Priority: 09.01.2004 JP 2004004091
(71) Applicant: Fuji Photo Film Co., Ltd, Kanagawa 250-0123 (JP)
(72) Inventor: Yoneyama, Takashi, Minamiashigara-shi, Kanagawa (JP); Sashihara, Kenji, Minamiashigara-shi, Kanagawa (JP)
(74) Representative: HOFFMANN - EITLE

(57) **Abstract**

A resin composition is provided that includes 100 parts by weight of a thermoplastic resin, 0.01 to 5 parts by weight of a higher aliphatic carboxylic acid heavy metal salt, and 0.01 to 5 parts by weight of a higher aliphatic carboxylic acid light metal salt. There is also provided the resin composition that includes the higher aliphatic carboxylic acid light metal salt formed from a light metal having a standard oxidation-reduction potential at 25°C of -1.2 V or less, and the higher aliphatic carboxylic acid heavy metal salt formed from a heavy metal having a standard oxidation-reduction potential at 25°C of more than -1.2 V.

## Description

The present invention relates to a resin composition for injection molding. More particularly, the present invention relates to a resin composition that prevents a phenomenon commonly known as 'sticking', which occurs with a screw of a molding machine or a mold interior when molding or kneading a thermoplastic resin.

When hot-melt molding a resin, a brown colored defect, usually called 'charring' can sometimes occur in a molded product. The 'charring' is a coloring fault that occurs in a molded product as a result of polymer chains of the resin being thermally decomposed due to an increase in temperature caused by heat generated by viscous shear, etc. of molten resin. On the other hand, 'sticking' is thought to be due to the resin decomposing and becoming carbonized, thus adhering to a screw, etc; this is caused, in the same way as for the 'charring', by heat generated by flow and shear and long-term operation in an extrusion molding machine, an extruder, etc. This deposit adheres firmly to the screw or a nozzle of the molding machine or an interface of a gate runner, etc. of a mold and accumulates. Part thereof sometimes becomes detached and blocks the inside of the mold, thus causing short shots (incomplete filling). In order to avoid this, the molding temperature is set low, an additive for preventing interface adhesion, such as a silicone, is added, or the material of the screw and the nozzle is changed from stainless steel, etc. to one with a surface chromium plating.

As a thermoplastic resin cleaning composition that has remarkable cleaning power for cleaning the interior of a molding machine to which a resin used for molding has firmly adhered because of thermal decomposition, etc. and which is difficult to clean, a thermoplastic resin cleaning composition in which a thermoplastic resin is mixed with a neutral salt of an alkylbenzenesulfonic acid and a basic magnesium stearate has been disclosed (JP-A-5-98072 (JP-A denotes a Japanese unexamined patent application publication)).

Furthermore, as a resin composition having excellent mold release properties when injection molding, a thermoplastic resin composition having as a main component an amorphous resin and further containing (A) an amorphous α-olefin copolymer and (B) a metal salt of a fatty acid, the total content of (A) and ( B) being 0.3 to 3.0 wt %, has been disclosed (JP-A-2002-20629).

For example, a compound resin is prepared by adding, to a high-impact polystyrene resin, a pigment such as carbon black or titanium oxide, a dispersant such as a metal salt of a fatty acid or liquid paraffin, or a lubricant such as a silicone oil or a fatty acid. When molding is carried out continuously using such a resin for two to three weeks or four to five months, deposits accumulate on a screw surface or a nozzle part of a molding machine, or a part of a mold, which may cause the screw diameter to increase, and as a result the amount of resin metered becomes insufficient, and defective molding might occur. In particular, the deposits on the nozzle part or the part of the mold become detached, thus causing the fault of defective molding due to short shots (incomplete filling). In order to prevent this fault, it becomes necessary periodically or quite frequently to clean the screw, the nozzle, etc. by dismantling, thus degrading the production efficiency.

It is an object of the present invention to provide a resin composition for injection molding that can prevent the formation of deposits on a screw or a nozzle surface of an injection molding machine.

A first aspect of the present invention relates to a resin composition comprising 100 parts by weight of a thermoplastic resin, 0.01 to 5 parts by weight of a higher aliphatic carboxylic acid heavy metal salt, and 0.01 to 5 parts by weight of a higher aliphatic carboxylic acid light metal salt.

A second aspect of the present invention relates to a resin composition comprising 100 parts by weight of a thermoplastic resin, 0.01 to 5 parts by weight of a higher aliphatic carboxylic acid metal salt formed from a metal having a standard oxidation-reduction potential at 25°C of -1.2 V or less, and 0.01 to 5 parts by weight of a higher aliphatic carboxylic acid metal salt formed from a metal having a standard oxidation-reduction potential at 25°C of more than -1.2 V.

The resin composition of the present invention enables short shot faults to be reduced and continuous long-term operation to be carried out in injection molding, resin kneading, etc.

As a result of an intensive investigation into the deposits by the present inventors, it has been found that certain types of metal selectively collect and accumulate at an interface and the deposit is not carbonized but rather is an insoluble material that retains a polymer chemical structure, and the present invention has been accomplished by examining a method for using a metal salt of a fatty acid as a resin additive.

The present invention relates to a resin composition comprising 100 parts by weight of a thermoplastic resin, 0.01 to 5 parts by weight of a higher aliphatic carboxylic acid heavy metal salt, and 0.01 to 5 parts by weight of a higher aliphatic carboxylic acid light metal salt.

The 'higher aliphatic carboxylic acid heavy metal salt' referred to in the present invention means a heavy metal salt of a higher aliphatic carboxylic acid. The 'higher aliphatic carboxylic acid light metal salt' referred to here means a light metal salt of a higher aliphatic carboxylic acid. In either of the above-mentioned salts, the 'higher aliphatic carboxylic acid' means an aliphatic carboxylic acid having at least 12 carbons, preferably having 12 to 30 carbons, and particularly preferably having 16 to 22 carbons. The higher aliphatic carboxylic acid may have a saturated hydrocarbon group or an unsaturated hydrocarbon group, and preferably has a saturated hydrocarbon group. The 'heavy metal' referred to here means a metal having a density of 4.0 g/cm³ or greater, and preferably a metal having a density of 5.0 g/cm³ or greater. The 'light metal' referred to here means a metal having a density of less than 4.0 g/cm³.

Examples of the aliphatic carboxylic acid having 16 to 22 carbons include stearic acid, palmitic acid, oleic acid, linoleic acid, linolenic acid, and behenic acid. Among these, stearic acid is preferable from the viewpoint of cost, handling, and properties.

With regard to the heavy metal forming the higher aliphatic carboxylic acid heavy metal salt, zinc, lead, tin, cadmium, etc. are preferable, and zinc is particularly preferable. As the higher aliphatic carboxylic acid heavy metal salt, zinc stearate is therefore preferable.

With regard to the light metal forming the higher aliphatic carboxylic acid light metal salt, an alkali metal such as sodium or potassium, an alkaline earth metal such as magnesium, calcium, or barium, and aluminum are preferable.

With regard to the higher aliphatic carboxylic acid light metal salt, sodium stearate, potassium stearate, magnesium stearate, calcium stearate, barium stearate, and aluminum stearate are preferable, and calcium stearate and barium stearate are particularly preferable.

In the resin composition of the present invention, the amounts of the higher aliphatic carboxylic acid light metal salt and the higher aliphatic carboxylic acid heavy metal salt added are preferably 0.05 to 5 parts by weight relative to 100 parts by weight of the thermoplastic resin, more preferably 0.1 to 2 parts by weight, and particularly preferably 0.3 to 1 parts by weight.

In a conventional resin composition for injection molding, zinc stearate is often used as a dispersion adjuvant. It is surmised that the above-mentioned 'sticking' phenomenon involves decomposition of zinc stearate. In the resin composition for injection molding of the present invention, the higher aliphatic carboxylic acid light metal salt is used in combination with the higher aliphatic carboxylic acid heavy metal salt, represented by zinc stearate, and this is thought to enable the decomposition of the higher aliphatic carboxylic acid heavy metal salt to be suppressed.

The resin composition of the present invention contains, relative to 100 parts by weight of a thermoplastic resin, 0.01 to 5 parts by weight of a higher aliphatic carboxylic acid metal salt whose metal has a standard oxidation-reduction potential at 25°C of -1.2 V or less and 0.01 to 5 parts by weight of a higher aliphatic carboxylic acid metal salt whose metal has a standard oxidation-reduction potential at 25°C of more than -1.2 V.

The values of the standard oxidation-reduction potential can be obtained by referring to 'Kagaku Binran (Handbook of Chemistry)' Ed. by the Chemical Society of Japan, Basic Data II, first edition (published in 1969). The standard oxidation-reduction potential is also known as the standard electrode potential and is the electrode potential when a hydrogen electrode is used as a reference electrode, which is the hydrogen ion unit activity in solution at a hydrogen pressure of 1 atm.

The resin composition of the present invention may further contain carbon black. In order to form a light-shielding container member, it is preferable to add carbon black as a light-shielding agent.

Carbon black can be classified in terms of starting materials, and examples thereof include gas black, furnace black, channel black, anthracene black, acetylene black, Ketjen carbon black, thermal black, lamp black, lamp soot, pine soot, animal black, and vegetable black.

The carbon black used in the present invention preferably has a pH (measured in accordance with JIS K 6221) of 6.0 to 9.0, and particularly preferably 6.5 to 8.5. The carbon black preferably has an average particle size (measured by electron microscopy) of 10 to 120 nm, and particularly preferably 12 to 70 nm. In particular, it is preferable for the carbon black used in the present invention to contain at most 3.5% of volatile components (measured in accordance with JIS K 6221), and particularly preferably at most 1.5%. The DBP oil absorption (measured in accordance with oil absorption method A of JIS K 6221) is preferably 50 ml/100 g or greater, and particularly preferably 70 ml/100 g or greater. Furnace carbon black that satisfies the above-mentioned preferred ranges is suitable for the present invention.

Examples of preferable carbon black commercial products include carbon black #20 (B), #30 (B), #33 (B), #40 (B), #44 (B), #45 (B), #50, #55, #100, #600, #950, #2200 (B), #2400 (B), MA8, MA11, and MA100 manufactured by Mitsubishi Chemical Corporation. Other examples include Black Pearls 2, 46, 70, 71, 74, 80, 81, and 607, Regal 300, 330, 400, 660, 991, and SRF-S, Vulcan 3 and 6, and Sterling 10, SO, V, S, FT-FF, and MT-FF manufactured by Cabot Corporation. Yet other examples include UniteelR, BB, 15, 102, 3001, 3004, 3006, 3007, 3008, 3009, 3011, 3012, XC-3016, XC-3017, and 3020 manufactured by Ashland Chemical Inc., but they should not be construed as being limited thereto.

The content of the carbon black is preferably 0.1 to 5.0 parts by weight relative to 100 parts by weight of the thermoplastic resin, more preferably 0.2 to 1.5 parts by weight, and particularly preferably 0.3 to 0.8 parts by weight.

With regard to the thermoplastic resin, an addition-polymerizable polymer is preferable, and an amorphous α-olefin copolymer is more preferable.

With regard to the amorphous α-olefin copolymer, a styrene-conjugated diene copolymer is preferable, and a high-impact polystyrene (HIPS) is more preferable.

The high-impact polystyrene referred to here means a polystyrene having impact resistance and denotes a blend or a copolymer of a polystyrene with an unsaturated rubber. The unsaturated rubber referred to here means a polymer of an aliphatic conjugated diene, and examples of a starting monomer therefor include 1,3-butadiene, isoprene, 2,3-dimethyl-1,3-butadiene, 2-ethyl-1,3-butadiene, 1,3-pentadiene, and chloroprene. Among these aliphatic conjugated diene monomers, 1,3-butadiene is preferable.

The high-impact polystyrene is described in 'Kobunshi Daijiten (Polymer Dictionary) translated under the supervision of T. Mita (Maruzen, published in 1994) and publications referred to therein.

The resin composition of the present invention may contain other additives such as, for example, an antioxidant, a liquid paraffin, or a fatty acid in a range that does not impair the effects of the present invention. The antioxidant, an addition method therefor, etc. that can be employed in the present invention are described in paragraphs 0010 to 0022 of JP-A-6-67356.

Various types of molded products can be produced by molding, and preferably injection molding, the resin composition of the present invention. A container and container member (hereinafter simply called a 'container member') are one example of a preferred molded product.

It is also possible to produce a light-shielding container and light-shielding container member (hereinafter simply called a 'light-shielding container member') by molding the carbon black-containing resin composition of the present invention.

Examples of the container member of the present invention include a core for winding a wide light-sensitive printing material to give a roll, a flange for protecting end faces of the roll, and container members for various types of recording materials.

It is also possible to use it as a container for a light-sensitive material, as a pack for an instant color unit, a container for a 135 format color negative film, etc.

Examples of the light-shielding container member include a resin molded product for a light-sensitive material and, in particular, a light-shielding container for a photographic light-sensitive material and a component member thereof (a moisture-proof container for a 135 format film cartridge (including a lid), a 135 format spool, a brownie format spool, an APS format spool, a magazine for an APS format film, an instant film pack, a 110 format film cartridge, a rectangular parallelepiped magazine housing a long length of light-sensitive material (including a magazine for light room loading), a tube for winding a long length of light-sensitive material, a flange for winding a long length of light-sensitive material and holding it from opposite sides thereof, a cushioning material placed in a container for a light-sensitive material, a supporting board for a stack of light-sensitive material (a package in contact with the stack of light-sensitive material, or a part of the package), etc.), and a main body unit, a front cover, a back cover, etc. for a film-with-lens (registered trademark 'Utsurundesu').

JP-A-6-67356 describes a moisture-proof container for a 135 format photographic film cartridge. FIG. 5 of this publication shows a main body unit, a front cover, a back cover, etc. for a film-with-lens.

Specific Examples of the present invention are explained together with Comparative Examples below, but the present invention is not limited to the Examples cited below.

### Example 1 Preparation of high-impact polystyrene resin (HIPS) pellets

HIPS resin pellets having the composition below were produced by adding a polybutadiene rubber and barium stearate to a carbon black-containing polystyrene (PS).

The resin pellets that were prepared had a polystyrene resin (PS content: 93.1 wt %, Mitsubishi #44 carbon black content: 0.6 wt %, hindered phenol-based antioxidant content: 0.1 wt %, zinc stearate content: 0.4 wt %, liquid paraffin content: 1.0 wt %),

4.0 wt % of a polybutadiene rubber dispersion (number-average molecular weight: 100000, molecular weight distribution: 4.5, average particle size: 1.5 µm) and, as an additional additive, 0.8 wt % of barium stearate so as to give a total metal stearate content of 1.2 wt %.

### Example 2

Pellets were prepared in the same manner as in Example 1 except that as the additional additive 0.8 wt % of calcium stearate was added instead of barium stearate so as to give a total metal stearate content of 1.2 wt %.

### Example 3

Pellets were prepared in the same manner as in Example 1 except that as the additional additive 0.8 wt % of magnesium stearate was added instead of barium stearate so as to give a total metal stearate content of 1.2 wt %.

### Example 4

Pellets were prepared in the same manner as in Example 1 except that as the additional additive 0.8 wt % of aluminum stearate was added instead of barium stearate so as to give a total metal stearate content of 1.2 wt %.

### Comparative Example 1

Pellets were prepared in the same manner as in Example 1 except that as the additional additive 0.8 wt % of zinc stearate was added instead of barium stearate so as to give a total metal stearate content of 1.2 wt %.

### Comparative Example 2

Pellets were prepared in the same manner as in Example 1 except that as the additional additive 0.8 wt % of lead stearate was added so as to give a total metal stearate content of 1.2 wt %.

### Comparative Example 3

Pellets were prepared in the same manner as in Example 1 except that the additional additive was not added.

### Comparative Example 4

Pellets were prepared in the same manner as in Example 1 except that the zinc stearate was not added and as the additional additive 0.4 wt % of barium stearate was added.

### Evaluation method

The degree of sticking to a screw of a molding machine and the degree of sticking to an SUS sheet (stainless sheet) were evaluated by the evaluation method below.

### (1) Degree of sticking to screw

An electric molding machine (mold clamping force: 5 ton, screw: made of general purpose steel, screw diameter: 10 mm, screw length: 500 mm) manufactured by Nissei Plastic Industrial Co., Ltd. was operated continuously at a resin temperature of 260°C with an injection cycle of 10 sec. and a mold weight of 5 g for 2 weeks. After dismantling the molding machine, the degree of sticking to the screw was evaluated visually using the ranking below.
A ··· no sticking
B ··· hardly any sticking noticed
C ··· very little sticking noticed
D ··· some sticking noticed

### (2) Degree of sticking to SUS sheet

A resin sample sheet was sandwiched between two 50 × 30 × 1.5 mm SUS 316 stainless sheets, and one end was fastened by means of a clip. This was heated in an electric furnace at 300°C for 10 hours and then allowed to stand at room temperature for 2 hours. When the two melt-bonded sheets were peeled apart, the resin adhered to the sheets. They were soaked in tetrahydrofuran solvent for 1 hour. Undissolved adhering regions remained. The area of the adhering regions was measured using an image analyzer to give a degree of sticking and was expressed as a value relative to a value of 10 for Comparative Example 1.

The standard oxidation-reduction potential value was obtained by referring to 'Kagaku Binran (Handbook of Chemistry)' Ed. by the Chemical Society of Japan, Basic Data II, first edition (published in 1969).

The amounts of additives added relative to 100 parts by weight of the thermoplastic resins and the evaluation results obtained are summarized in Table 1.

**[Table 1]**

| | Example | | | | Comparative Example | | | |
|---|---|---|---|---|---|---|---|---|
| | 1 | 2 | 3 | 4 | 1 | 2 | 3 | 4 |
| Amount of resin added (wt %) | | | | | | | | |
| Polystyrene resin | 95.9 | 95.9 | 95.9 | 95.9 | 95.9 | 95.9 | 95.9 | 95.9 |
| Polybutadiene resin | 4.1 | 4.1 | 4.1 | 4.1 | 4.1 | 4.1 | 4.1 | 4.1 |

| Amount of additive added | | | | | | | | |
|---|---|---|---|---|---|---|---|---|
| Mitsubishi #44 Carbon black | 0.6 | 0.6 | 0.6 | 0.6 | 0.6 | 0.6 | 0.6 | 0.6 |
| Irganox 1010 Antioxidant | 0.1 | 0.1 | 0.1 | 0.1 | 0.1 | 0.1 | 0.1 | 0.1 |
| Liquid paraffin | 1.0 | 1.0 | 1.0 | 1.0 | 1.0 | 1.0 | 1.0 | 1.0 |
| Zinc stearate | 0.4 | 0.4 | 0.4 | 0.4 | 0.4 | 0.4 | 0.4 | non |
| Metal stearate | 0.8 (Ba) | 0.8 (Ca) | 0.8 (Mg) | 0.8 (At) | 0.8 (Zn) | 0.8 (Pb) | non | 0.4 (Ba) |
| Degree of sticking to screw | A | A | B | B | C | D | B - C | A |
| Degree of sticking to SUS sheet | 4 | 4.5 | 6.5 | 7 | 10 | 11 | 8 | 1 |

**[Table 2]**

| | Standard oxidation-reduction potential (V) | Density (g/cm³ | Type |
|---|---|---|---|
| Barium | -2.9 | 3.5 | Light metal |
| Calcium | -2.86 | 1.55 | Light metal |
| Magnesium | -2.36 | 1.74 | Light metal |
| Aluminum | -1.66 | 2.70 | Light metal |
| Zinc | -0.76 | 7.14 | Heavy metal |
| Lead | -0.12 | 11.34 | Heavy metal |

The evaluation results are given in Table 1.

The standard oxidation-reduction potential and the densities of the metals are given in Table 2.

Examples 1 to 4: In Examples 1 to 4, both the degree of sticking to the screw and the degree of sticking to the SUS sheet were improved compared with Comparative Example 1, in which zinc stearate was additionally added. In particular, when barium stearate (Example 1) or calcium stearate (Example 2) was added, the degree of sticking to the screw was improved: On the other hand, the lead stearate of Comparative Example 2 was worse than Comparative Example 1.

Furthermore, although Comparative Example 3 was not improved compared with Examples 1 and 2, etc., Comparative Example 4 gave better results than those of Comparative Example 3.

The present inventors have found from these results that there is a dependent relationship between the sticking to the screw and the standard oxidation-reduction potential of the metal of the fatty acid metal salt. It is therefore recommended to use, for example, a magnesium salt or a calcium salt, which has a standard oxidation-reduction potential that is lower than -1.2 V, in order to prevent sticking to a molding machine screw, etc., which occurs when employing zinc stearate, which is currently in general use.

### Example 5

When a sample was produced in the same manner as in Example 1 but using, instead of the HIPS, which is a blend of a polystyrene resin and a polybutadiene resin, an ABS resin (CYCOLAC EX120, manufactured by UMG ABS, Ltd.), the same good results as in Example 1 were obtained.

## Claims

1. A resin composition comprising 100 parts by weight of a thermoplastic resin, 0.01 to 5 parts by weight of a higher aliphatic carboxylic acid heavy metal salt, and 0.01 to 5 parts by weight of a higher aliphatic carboxylic acid light metal salt.

2. The resin composition according to Claim 1, wherein the higher aliphatic carboxylic acid light metal salt forms from a light metal having a standard oxidation-reduction potential at 25°C of -1.2 V or less, and the higher aliphatic carboxylic acid heavy metal salt forms from a heavy metal having a standard oxidation-reduction potential at 25°C of more than -1.2 V.

3. The resin composition according to either Claim 1 or 2, wherein the composition further comprises 0.1 to 5 parts by weight of carbon black relative to 100 parts by weight of the thermoplastic resin.

4. The resin composition according to any one of Claims 1 to 3, wherein the thermoplastic resin is an amorphous α-olefin copolymer.

5. The resin composition according to any one of Claims 1 to 4, wherein the α-olefin copolymer is a high-impact polystyrene.

6. The resin composition according to any one of Claims 1 to 5, wherein the higher aliphatic carboxylic acid heavy metal salt is zinc stearate.

7. The resin composition according to any one of Claims 1 to 6, wherein the higher aliphatic carboxylic acid light metal salt is selected from the group consisting of sodium stearate, potassium stearate, calcium stearate, magnesium stearate, barium stearate, and aluminum stearate.

8. A container member molded from the resin composition according to any one of Claims 1 to 7.

9. A light-shielding container member molded from the resin composition according to any one of Claims 3 to 7, the resin composition comprising carbon black.

10. The light-shielding container member according to Claim 9, wherein the light-shielding container member is used for packaging a light-sensitive material.
